# EUROPEAN PATENT SPECIFICATION

(11) **EP 3 361 408 B1**
(45) Date of publication and mention of the grant of the patent: **21.08.2019**
(21) Application number: 17155614.5
(22) Date of filing: 10.02.2017
(51) Int. Cl.: G06F 21/60, H04L 29/06

(54) **VERIFIABLE VERSION CONTROL ON AUTHENTICATED AND/OR ENCRYPTED ELECTRONIC DOCUMENTS**
VERIFIZIERBARE VERSIONSKONTROLLE AUF AUTHENTIFIZIERTEN UND/ODER VERSCHLÜSSELTEN ELEKTRONISCHEN DOKUMENTEN
CONTRÔLE DE VERSION VÉRIFIABLE DE DOCUMENTS ÉLECTRONIQUES AUTHENTIFIÉS ET/OU CRYPTÉS

(43) Date of publication of application: 15.08.2018
(73) Proprietor: Mertens, Michael, 50670 Köln (DE); Raumann, Michael, Mong Kok, Kowloon (HK)
(72) Inventor: MERTENS, Michael, 50674 Köln (DE); RAUMANN, Michael, 50674 Köln (DE)
(74) Representative: Wegner, Hans

(56) References cited:
- WO-A1-2016/131044
- US-B1- 7 395 436
- ARIEL J FELDMAN ET AL: "SPORC: Group Collaboration using Untrusted Cloud Resources", USENIX,, 23 September 2010 (2010-09-23), pages 1-14, XP061010910, [retrieved on 2010-09-23]

## Description

### 1. Technical field

The present invention generally relates to the field of data security and more particularly to methods for obtaining a verifiable version control mechanism on authenticated and/or encrypted electronic documents.

### 2. The prior art

Current trends in data management show it is common to use online storage solutions for outsourcing electronic documents. These services provide ubiquitous access to user data, and enable users to jointly work on outsourced electronic documents. Due to privacy concerns, this data is usually encrypted and the secret key is shared among those having access to the electronic document. However, this presents several problems, such as: determining the current version of the electronic document, and determining who made this change in a verifiable manner. Current technology has no mechanism to track user changes on an encrypted and/or authenticated electronic document in a verifiable manor.

Prior systems, such as U.S. Pat. No 4,933,969 to Marshall et al., authenticates storages and protects against malicious modifications. However, their solution only protects the integrity of the data and not the privacy. Moreover, there is no mechanism to support a verifiable version control mechanism.

U.S. Pat. No 6,751,632 to Petrogiannis offers a system that allows to transform one digital document in one file format into another one without losing the verifiability. This system does also not support the privacy of the data and it does not support a verifiable version control mechanism.

The goal of other approaches is the generation and authentication of digital signatures, such as U.S. Pat. No 5,195,133 to Kapp et al. That system describes a mechanism to authenticate payment documents. These documents are signed by a customer and they store the signature in a digital format. The goal of the system is to ensure that a document was signed at a particular time when the transaction was completed. This system creates timestamps, but it is limited in that it does not protect the privacy of the documents and it also does not support a versioning system in the sense that users can switch back to a prior state of a digital document.

Patent EP 0 674 253 A1 describes a system where multiple users can work on a shared electronic document that is also encrypted. The encryption key is shared among the users having access to the electronic document. Moreover, the patent also suggests a version management system. While this system realizes several of the aspects our invention, it does not provide any mechanism to verify the changes, i.e., in this system it is not possible to track the changes back to a certain user.

It is therefore the technical problem underlying the present invention to create a verifiable version control mechanism on authenticated and/or encrypted electronic documents which ideally allows a user to determine who edited an electronic document at any point in time and ideally also allows the user to revert back to any prior version, thereby at least partly overcoming the above explained disadvantages of the prior art.

WO 2016/131044 A1 relates to systems and methods for secure collaboration enabling precise access management. Collaborator permissions are modified in the same manner as a collaborative document. Use of asymmetric keys to encrypt private portion of the collaborative document enable write-only permissions. Permissions may be specified at any granularity allowed by operational analysis.

Feldman et al. "SPORC: Group Collaboration using Untrusted Cloud Resources*"* relates to cloud-based services. In order to overcome deficiencies of cloud-based services, SPORC is presented, a generic framework for building a wide variety of collaborative applications with untrusted servers. In SPORC, a server observes only encrypted data and cannot deviate from correct execution without being detected.

US 7,395,436 B1 relates to various methods, software programs, and systems for electronic information security that may serve to protect information security by providing an integrated system that helps ensure confidentiality, integrity, accountability, and ease of use.

### 3. Summary of the invention

According to one aspect of the invention, the technical problem is solved by a method for encrypting files performed by a client computer. This method comprises encrypting at least part of the content of a file into a data structure (also referred to herein as "change-set data structure") using a secret key that is shared among a plurality of users, and signing the change-set data structure using a private signing key of a user of the client computer. The signed change-set data structure may then be uploaded to a server computer (if a client/server system is used) and/or may be transmitted (directly) to another client computer (if a peer-to-peer system is used).

According to another aspect of the invention, a method for decrypting files performed by a client computer is provided. This method comprises receiving a change-set data structure (e.g. from a server computer in the above-mentioned client/server scenario, and/or from another client computer in the above-mentioned peer-to-peer scenario), verifying a digital signature of the change-set data structure using a public verification key of a user who created the change-set, and decrypting an encrypted data portion of the change-set data structure using a secret key shared among a plurality of users to obtain the file.

Accordingly, a verifiable version control mechanism on authenticated and/or encrypted electronic documents (also referred to herein as "files") which allows a user to determine who edited an electronic document at any point in time is provided. This is achieved by the change-set data structure being signed by the author. The signature can be verified by the recipient to verify the claim of authorship.

Additionally or alternatively, the change-set data structure further comprises one or more of: a document identifier, a hash of the previous version of the file, an encrypted name of the file, and/or a hash of the encrypted content of the file, and/or supplementary data necessary to decrypt the content of the file (e.g., an initialization vector for decryption with AES-GCM), and/or supplementary data necessary to authenticate the encrypted data (e.g., a message authentication code (MAC) from a message authentication scheme such as HMAC, or an authentication tag from an authenticated decryption scheme such as AES-GCM), and/or a sequence number, and/or the offsets and lengths of sections of the file that have changed. Accordingly, the previous file hash may define a partial-order that change-sets must be applied in for the resulting encrypted file to be consistent. Furthermore, a mechanism for clients to check the order of the change-sets beyond the sequencing that may have been assigned by the clients is provided. Those skilled in the art may appreciate that the hash of the encrypted content of the file together with the digital signature, and the supplementary authentication data may perform similar functions: namely, to indicate consistency of the cipher-text. Therefore, the hash of the encrypted content and supplementary authentication data should be considered to be alternative components of the change-set structure. The previous file hash, however, should be treated as a preferred component of the change-set structure in that it may always be needed. Those skilled in the art will appreciate that the authentication of the encryption may ensure non-malleability of the ciphertext for the data contained within this particular change-set, while the file hash may indicate the correctness of the encrypted file as a whole.

Additionally or alternatively, the method further comprises the step of providing a key-pair (preferably an asymmetric key able to perform public-key encryption and digital signing operations, e.g. an RSA key) to the user suitable for digital-signing and encryption operations according to particular aspects of the invention. Those skilled in the art may appreciate that it may prove impractical to use a single key-pair for both digital signing and public-key encryption, such that it may be preferable to use separate keys for each kind of cryptographic operation. Principally, those aspects of the invention that require digital signing and public-key encryption may be performed with a single key-pair, but employing such techniques may prevent some of the objectives of the invention from being achieved. Therefore, we consider a key pair to represent either a single key-pair, or a plurality of keys, which will be appreciated as common practice in the security field. Those skilled in the art will appreciate the security advantages of separate keys being used for signing and encryption. However, the realization of embodiments of the invention in its basic form does not necessarily depend on these advantages, even though failure to address the security particulars may complicate the key distribution aspect of the invention.

Additionally or alternatively, the key-pair is usable for encrypting the shared secret key, which is preferably a symmetric key. Accordingly, the key-pair does not comprise of the secret key per se, but is rather a crucial foundation for the secure distribution of the key - specifically, the key-pair is used to encrypt the secret key for each user.

Additionally or alternatively, the method comprises a step of verifying the authenticity of a particular user's key-pair, which is comprised of either the manual process of comparing the fingerprint of the key-pair in an ad-hoc fashion, or preferably the use of a PKI that enables the issuance of a publically-visible certificate that verifies the ownership of the key-pair. Those skilled in the art may appreciate the derivation of a fingerprint of a public-key is a technique that is commonly understood, and no aspect of the invention depends on its precise definition. Accordingly, as the use of certificates in this fashion is so common and central to the purpose of a PKI, it should be appreciated that the particulars of the PKI do not affect any aspect of the invention, with the one exception that embodiments of the invention may require that the PKI provide globally trustworthy authentications for servers and/or users alike, without which it may not be possible to automatically authenticate user keys of the system.

Additionally or alternatively, the encrypted data portion of the change-set data structure represents only a part of the content of the file which has been changed as compared to a previous version of the file. Accordingly, data transfer between the client devices and/or the server devices is dramatically reduced as compared to transferring the full file whenever only a part of the file changed, computational effort can also be reduced as compared to transferring the full file as the entire file need not be decrypted when only a small part of the file is changed. It should be appreciated that these efficiencies are significant because the data transfer and computational costs impact not only the author of a change-set, but also every other client in the system.

Additionally or alternatively, the method further comprises the step of providing a group change data structure comprising one or more of: a group identifier, one or more references to a public key of a user to be added to and/or removed from a group corresponding to the group change data structure, a key fingerprint for each reference, a digital signature, a sequence number, one or more secret keys usable for encrypting and decrypting files, wherein the one or more secret keys are encrypted using the public part of the user's key-pair, and/or one or more access permissions for users. Accordingly, it can be assured that only members of the group are able to decrypt the secret keys, and accordingly decrypt the data contained in the change-sets.

Additionally or alternatively, the method further comprises the step of creating a new group change and new secret key in response to a group change wherein a group member removed themselves, leaving the group without a new secret key. Accordingly, clients and/or servers should reject any change following a group change wherein a member removed themselves until a group change is submitted that generates a new secret key that is known only to the remaining members. The particular client that creates the new secret key may preferably be the client that next intends to make a change to the group membership, or create a new change-set, in this case the particular client would first generate the new secret key and associated group change, submit it, and then submit the change they intended to make. Those skilled in the art may appreciate without such a mechanism to provide a new secret key when a user removed themselves, it may not be possible to ensure the confidentiality of following changes to the group.

Additionally or alternatively, the method further comprises the notion of a history of the group, wherein the group changes that define the membership of the group and the change-sets that define the content of the files of the group are retained and sequenced so that clients have identical versions of the group membership and content of the files. A mechanism for sequencing these group changes, which is subsequently described, may provide protection against a server administrator recovering a secret key at a later date, then modifying the data stored on the server to reflect a different history.

Additionally or alternatively, the history of the group may be split into segments wherein each segment contains the group changes and change-sets that were created within a particular time period. Each segment of the history may define a preferred ordering for the group changes and/or change-sets that it contains. The group changes and/or change-sets in each segment may be totally ordered (in which there is an absolute order for the sequence of group changes and/or change-sets), or the change-sets in each segment may be partially ordered (in which there is a relative ordering between group changes and/or change-sets). Those skilled in the art may appreciate that establishing a total ordering for changes in a distributed system while retaining efficiency and a non-malleable history in a multi-client setting is a non-trivial problem, therefore in this aspect of the invention a partial ordering of changes is preferred, and hitherto a mechanism to achieve a non-malleable history using a partial order is described.

Additionally or alternatively, each segment may be subdivided to form sequences of group changes and/or change-sets that must be applied before other structures in the segment to ensure that all clients have a consistent view of the group and its associated data. This additional segmentation may be achieved by including a hash (preferably using SHA-384) of the signature digest of a previous structure, which is denoted by key hash, in the group changes and/or change-sets that identifies a previous change that may preferably be applied prior to this change. Those skilled in the art may appreciate that this further segmentation allows changes that must be applied in particular orders to be handled correctly without requiring total ordering for all changes, which may prove detrimental to performance or prevent some of the security objectives of the invention from being achieved.

Additionally or alternatively, the mechanism by which the segmentation and/or non-malleability of the history is achieved may include a history data structure, which preferably signifies the end of a segment of the history and ensures that the group changes and/or change-sets contained in this segment of the history can no longer be manipulated. The history data structure may comprise a first hash (preferably using SHA-384) that identifies the previous segment of the history (for the first segment this may be the result of hashing an empty string; or alternatively, hashing the signature digest of the last history data structure), a second hash (preferably using SHA-384) that covers an ordered list of the signature digests of each group change and/or change-set structure in the history segment, and/or a digital signature over the first and second hash. Those skilled in the art may appreciate that the use of the signature digest in this way creates a chain of segments that is helpful in achieving the non-malleability of the history, and accordingly the use of the digital signatures could be substituted with another integrity scheme (such as a message authentication scheme, e.g., HMAC), so long as it is only possible for clients in possession of the secret key to generate the history data structure, and the output of the scheme leaks no information about the secret key.

Additionally or alternatively, the method further comprises the step of defining a new key hash when a new group change and/or change-set is authored by a client and the previous change was a so-called significant change that must be handled before following group changes and/or change-sets. The criteria for significant changes is preferably: a change-set that adds a new file, a change-set that removes a file, a group change that adds a new member, and/or a group change that removes a member. The new key hash that is used is preferably the hash of the signature digest of the significant change that required a new key hash be used.

Additionally or alternatively, the order that the group changes and/or change-sets are hashed to calculate the second hash of the history data structure may be: firstly according to the structure's key hash, secondly according to the structures kind (change-sets that modify a file should be ordered first, following by group changes and change-sets that add or remove a file), and/or finally by the value of the structure's signature digest. Ordering the structures in this manner provides a total ordering for the structures in the segment that enables other clients to re-calculate the hash in the history segment, which is helpful for achieving the non-malleability of the history. It may be appreciated that the so-called significant changes may be ordered last as they indicate the end of a sub-sequence and so the use of a new key hash. This property of the ordering is helpful to retain the relative ordering of the significant changes to change-sets that modify files, so that verifying that a change to a file was authorized can be performed retrospectively.

Additionally, or alternatively, the method further comprises the step of creating a history data structure to define the start of a new segment. The criteria for a creating a new history data structure is preferably that a particular time period has passed since the beginning of the last segment, which may be defined by the policy of the organisation operating the system, and may be configurable in the system. The period of time that is selected (e.g. 30 days) may correspond to a period of time in which manipulations of data in the system can be detected, and after which period it should no longer be possible for system administrators to manipulate data stored in the last history segment. The history data structure may comprise the first hash that is the key hash of the last history data structure, the second hash which is a hash over a list of the signature hashes of the structures in the history segment, which is ordered according to key hash, structure kind, and signature digest, as was previously described, and optionally a digital signature that is signed by the author of the history data structure. Those skilled in the art may appreciate it is this step of creating the history data structure and assigning a total ordering to the structures in the segment that improves the non-malleability of the history for those segments that have a history data structure.

According to another embodiment of the invention, a computer program comprising instructions for implementing any of the methods defined above is provided. Furthermore, the invention also concerns a client computer configured for performing any of the methods defined above.

Lastly, a system comprising a plurality of client computers is provided in accordance with the above-explained aspects. The client computers may communicate directly with one another (peer-to-peer scenario), and/or the system may further comprise at least one server computer as an intermediary between the client computers (client/server scenario).

The invention is defined by the independent claims.

### 4. Short description of the drawings

In the following detailed description, presently preferred embodiments of the invention are further described with reference to the following figures:
- Fig. 1:: illustrates a method for establishing a group of persons according to an embodiment of the invention;
- Fig. 2:: illustrates a method for encrypting and authenticating a new document according to an embodiment of the invention;
- Fig. 3:: illustrates a method for verifying the authenticity of a document according to an embodiment of the invention;
- Fig. 4:: illustrates a method for adding a person to the membership of a group according to an embodiment of the invention;
- Fig. 5:: illustrates a method for removing one or more persons from the membership of a group according to an embodiment of the invention;
- Fig. 6:: illustrates a method to modify an existing document and transfer the change to another client according to an embodiment of the invention;
- Fig. 7:: illustrates a method to roll-back a document to a previous version according to an embodiment of the invention;
- Fig. 8:: illustrates a method to roll-back a group to a previous version according to an embodiment of the invention;
- Fig. 9:: illustrates a method for verifying the integrity of a group according to an embodiment of the invention;
- Fig. 10:: illustrates a key structure according to an embodiment of the invention;
- Fig. 11:: illustrates a hardware architecture according to an embodiment of the invention.

### 5. Detailed description

In the following, presently preferred embodiments of the invention are described with respect to a verifiable version control mechanism on authenticated and/or encrypted electronic documents.

In its most general form, certain embodiments disclosed herein may operate in concert to provide a process comprising the following steps: a) establishing a group of persons collaborating on a set of documents; b) creating a document to be shared in encrypted form with the group; c) verifying the integrity of the group; d) verifying the authenticity of the document; e) rolling back the document to a previous version; and f) modifying the document and synchronizing the changes with other members of the group.

This process enables the creation of file collaboration systems such as Dropbox, but providing end-to-end encryption with multiple users without necessitating the server hardware to know any of the plaintext data. Furthermore, implementation of the security schemes described preclude a server administrator from contributing data to file storage, nor modifying already existing data without detection.

The embodiments described herein may use any or all of the aspects, components, subsystems and/or functionalities described in the following:

### User groups:

A user group (also referred to as "group") may comprise a set, i.e. any number of persons that have agreed to work together on a set of documents. The invention may provide a digital representation of the group, a digital representation of each person, a digital representation of each document, a server to store the persistent data, a permission scheme to define the access policy for reading and writing group and/or document changes, a transmission scheme for relaying group and/or document changes, an integrity scheme that ensures continuity in the group and/or document changes, a verification scheme that maintains the current state of which changes have been approved and/or verified, and/or a key distribution scheme that provides secret keys to group members.

### Users:

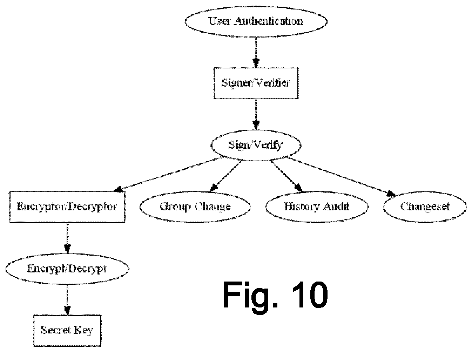

Each user (also referred to as "person") in the group may be represented by a public key which can be used to perform verification of digital signatures and encryption of private data. This public key, i.e. the verifying key and the encrypting key (see also Fig. 10) may be realized as either (a) ECC key-pairs, or (b) RSA key-pairs. Those skilled in the art may appreciate that these key-pairs may represent either a single key-pair, or a plurality of key-pairs to ensure that it is safe to use the key-pairs for both digital signing and public-key encryption operations. Accordingly, the reference to a key-pair may refer to either a single key-pair or multiple key-pairs. However, no aspect of the invention depends on the keys either being combined or separate, except that the key-pairs must be used in a setting that is secure in order for the objectives of the invention to be achieved.

In one possible embodiment, these key-pairs are preferably created in pairs and arranged so that a first key-pair comprises a private signing key ("signer") used for digital signing and a public verification key ("verifier") used for signature verification while a second key-pair comprises a public encryption key ("encryptor") used for encryption and a private decryption key ("decryptor") used for decryption (as in Figure 10). These key pairs may be authenticated on the basis of the public verification key. The private signing key may create a digital signature over the public encryption key, so that the pair of key-pairs can be treated as a single unit and used for both verification and encryption operations. Therein, the verification key may be considered to be the "master" - this is the key that is authenticated, and the encryption key may be considered to be authenticated "by proxy" because of the digital signature. Additionally, public keys may be identifiable by some value that is denoted by "key identifier".

### Group change data structure:

Each group may be represented by a series of digitally signed structures ("group changes") that specify the inclusion and/or exclusion of particular users, i.e. their respective public keys (thereby altering the membership of the group). The first group change may define the initial membership of the group.

The group change structures may be digitally signed by the author of the change. This digital signature may be created using the private signing key ("signer") of the group member using e.g., ECDSA or EMSA-PSS, depending on the particular kind of key-pairs that are used.

In certain embodiments, a group change data structure may contain any or all of the following:
- A group identifier ("group id"), which is preferably a randomly generated string that identifies the group.
- A reference to the public keys of the group members to be modified with this group change, preferably a list of the respective key identifiers.
- A key fingerprint for each reference / key identifier to verify the authenticity of the referred to public key.
- A digital signature that ensures the integrity of the preceding data.
- An integer that provides a total ordering for the group change ("sequence number"). Therein, the sequence number may not be optional in case there is no alternative mechanism to ensure ordering of the group because the group change specifies only differences in the group membership.
   One alternative however, might be to store the whole group membership. In such a case, one could realistically elide the sequence number.

### Change set data structure:

Each document may be represented by a series of digitally signed structures ("change-sets") that may contain the document encoded as a series of encrypted blocks, with each change-set describing the difference between the last version of a file and a new version. The change-set data structure may be digitally signed using the private signing key ("signer") of the group member that is authoring the change.

In certain embodiments, a change-set data structure may contain any or all of the following:
- A document identifier ("entity id"), which is preferably a randomly generated string that uniquely identifies the document.
- Required inputs for the encryption scheme ("encryption info"), which is preferably an initialization vector ("IV") that is used with the preferred encryption scheme AES-GCM. However, other encryption schemes that require no starting value ("SV") may omit this field.
- Required inputs for the integrity scheme ("integrity info"), which is preferably an authentication tag that is the output of the preferred authenticated encryption scheme AES-GCM. Alternatives include a Message Authentication Code (MAC) when the integrity scheme used is a message authentication scheme such as HMAC.
- A hash of the complete encrypted document and/ or a hash over the previous version of the encrypted document. The cryptographic hash function employed may be SHA-384, but other compression functions that provide equivalent security may be used. Therein, the previous file hash may provide per-file continuity of the ciphertext, i.e., ensuring that change-sets for a particular file are applied in the correct order. Hence, this may provide a mechanism for clients to check the order of the change-sets beyond the sequencing that may have been assigned by the clients.
- The data offsets (in bytes) and sizes (in bytes) of the changed parts of the file ("block list"). Each encrypted document is made up of a series of encrypted blocks that contain the cipher-text in preferably 64KiB chunks (although other sizes could be chosen). This chunking of the file is necessary so that differences in the plain-text and cipher-text files can be easily determined, and the hashing and the encryption of the file be done on this basis. The file may not be completely composed of fixed-length blocks (e.g., in the preferred encryption scheme AES-GCM, the final block may contain less than 64KiB of cipher-text), and it is conceivable that an alternate variable-length scheme be employed, which would still require offsets and sizes to be recorded, but may not utilize fixed-length blocks.
- The encrypted name of the document.
- The encrypted data of the changed parts ("payload") of the document. The encryption is preferably performed using a symmetric encryption technique, such as AES in GCM mode, which preferably uses the IV specified in the change-set. Preferably, this is performed using a symmetric key which is shared among all users of the group, which is referred to as "secret key" in Fig. 10. As the secret key is one of the inputs to the AES-GCM as well as the IV, it will be readily understood that other encryption schemes may require other inputs.
- A digital signature over the preceding items.
- An optional integer that provides a total ordering for the change-set ("sequence number").

### Permission scheme:

Certain embodiments may use a permission scheme that specifies one or more operations that each group member is allowed to perform. The scheme may designate a series of overlapping access levels that grant permission to particular actions, with the higher access levels also granting access to the actions from the lower levels.

In certain embodiments, the permission scheme may define access levels, such as "no access" (not a member of the group; no operations can be performed), "read access" (the member can read change-sets and/or group changes), "write access" (the member can create new change-sets) and/or "change member access" (the member can create new group changes).

The group change data structure(s) may comprise one or more access levels as explained above for each member, which is preferably represented as an integer. The permissions may be specified in the group changes, but not in the change-sets.

The permission scheme may be used by the client to reject changes relayed by the server that are authored by users without appropriate group access, and/or by the server to reject submission of any change (whether change-set or group change) by a user without appropriate permission. By processing each group change in sequence, clients may be able to build a *"user list"* of the group that specifies the key identifiers and respective access levels of each user. This user list then may be used to reject changes that it receives, depending on whether the user that digitally signed the structure was empowered with the appropriate access level to make that change when structure was processed.

### Transmission scheme:

Certain embodiments may use a transmission scheme that provides clients, i.e. computers used by the users, access to a secure channel to exchange group and file information (such as the above-explained group changes and/or change-sets). This scheme defines a number of two-way protocols and one-way notifications to communicate with clients, and may comprise any or all of the following:
- A protocol for transmitting a new group change to the server.
- Notification to clients informing them of a new group change.
- A protocol for transmitting a new change-set to the server.
- Notification to clients informing them of a new change-set.
- An optional protocol for requesting group changes according to its sequence number.
- An optional protocol for requesting change-sets according to its sequence number.

Embodiments of the invention may employ a central server system comprising one or more servers for persistent data storage that retains all group changes and/or change-sets for each group. Additionally, the server(s) may facilitate exchange of information between clients through the implementation of the transmission protocol, and/or implement authorization for the persistent storage by implementing the permission scheme. Apart from such a client/server system, embodiments of the invention may also be employed within a peer-to-peer scenario, i.e. data may be communicated between client computers directly without the need of an intermediary server computer. In still a further possible embodiment, a blockchain may be used to store the data.

### Integrity scheme:

Certain embodiments may use an integrity scheme to protect the integrity of sections of the history, i.e. the overall sequence of all changes to documents and/or groups as represented by their corresponding change-sets and/or group changes, which happened over the lifetime of the system (also referred to as "workroom"). More precisely, the integrity scheme may ensure a partial order of all changes. Specifically, the contents of each segment of the history may be ensured, but because of the scheme used to ensure the integrity, there may be no provable scheme to specify the exact total ordering. E.g., the scheme records that changes A, B and C happened in segment X, but conceivably the order processed by the server might have been B, A, C.
Practically this does not cause a problem because the use of the "previous hash" in the change-set may set the orders for changes for a specific file, and new segments may be created when creating and deleting files, there is no dependency between files, so there is no need for a "natural" order for changes between different files. This scheme may define a data structure that finalizes a section of the history, places additional requirements on the group change and change-set structures, defines an order for the structures of the history segment, defines a criterion for starting a new history segment, defines criteria for using a new key hash, and/or defines an augmentation to the transmission protocol.

An example of the history data structure may be as illustrated in the following Table 3:

**Table 3**

| Node | Comment |
|---|---|
| Init | The first node in the history of the workroom. |
| Group Change: | Adds new members to the workroom. |
| • Signature Digest: 0xAB | |
| • Key Hash: 0x00 | |
| Changeset: | Adds a new file to the workroom. Because the previous group change is a "significant change", the changeset must use the signature digest of that structure as the key hash (in this case to the group change signature). Each segment of history may be sub-divided using the key-hash to denote *"significant"* changes that may have to be ordered before any other change in that segment. This may be achieved by clients implementing the behaviour that before a client can process a particular structure, it may have to have processed the structure that corresponds to the "key hash" stored in the structure it wants to process. |
| • Signature Digest: 0xFC | |
| • Key Hash: 0xAB | |
| Changeset: | Modifies the previously added file in the workroom. Because the previous change is a "significant change", the changeset must use the signature digest of that structure as the key hash. |
| • Signature Digest: 0xDB | |
| • Key Hash: 0xFC | |
| Changeset: | Modifies the previously added file in the workroom. |
| • Signature Digest: 0xCA | |
| • Key Hash: 0xFC | |
| Changeset: | Modifies the previously added file in the workroom. |
| • Signature Digest: 0x1B | |
| • Key Hash: 0xFC | |
| History Audit: | Following thirty days passing since the beginning of the segment, all structures are rejected by the server until a history audit packet is generated. The Segment hash is calculated by ordering packets by their key hash and then their signature digest, and hashing the result of concatenating their signature digests. |
| • Signature Digest: 0xA9 | |
| • Key Hash: 0xFC | |
| • Segment Hash: H(0xAB\|0xFC\|0x1B\|0xCA\|0xDB) | |
| Changeset: | Modifies the previously added file in the workroom. Because the history audit is a "significant change", the changeset must use the signature digest of the history audit as the key hash. |
| • Signature Digest: 0xBB | |
| • Key Hash: 0xA9 | |

The realization of the integrity scheme may comprise one or more of the following:
(a) A "history audit" structure (see the last but one row in the exemplary Table 3 above) that may comprise:
   - A hash "key hash" that is taken over the signature digest of the structure that began this history segment; The key hash may denote the structure that is required to be processed before processing the current structure - it establishes a partial order for structures in the history, which enables a better performing system when multiple clients are operating on files simultaneously.
      E.g., if it would be required that every client needed to be up-to-date then uploading changes would be essentially serialized, and every time a change was made by a client, the clients would have to get the latest data from the server first.
      However, with the mechanism disclosed herein file changes may be processed in parallel, so long as it does not require a significant change to be processed in the middle. The segment hash may be used to "fix" the order of the changes in a particular history segment. This may provide protection against a server administrator recovering a secret key at a later date, then modifying the data stored on the server to reflect a different history - as this would lead to a non-verifiable history.
   - A hash "segment hash" that is taken over all the structures in this history segment, preferably in the order as explained in Table 3 above; and/or
   - A digital signature over the preceding elements.
(b) An augmentation to the group change structure comprising:
   - A hash "key hash" taken over the signature digest of the last significant change.
(c) An augmentation to the change-set structure comprising:
   - A hash "key hash" that is taken over the signature digest of the last significant change.
(d) An ordering for the structures in a history segment (as already briefly explained above):
   - Firstly, by key hash. The ordering by key-hash may be necessary to establish the partial ordering previously described (see section "integrity scheme"), e.g., splitting history into segments according to groups of actions that need to be performed before the following parts of the history can be processed.
   - Secondly, by kind, for which each type of structure may be assigned a priority that may be represented by an integer. The type may be used to ensure that within each group, the insignificant and significant actions retain the same relative ordering. E.g., recording that a modify takes place before a group change. A preferred prioritization is: a change-set that modifies a file having the highest priority, followed by a group change having the next highest priority, followed by a change-set that adds or removes a file having the next highest priority;
   - Thirdly, by the hash taken over the signature digest of the structure. The hash over the signature digest may ensure a reproducible order of all structures in that segment, which means that clients can verify that they have the same group changes and change-sets as the other clients, and therefore can check whether the history has been falsified.
(e) A criterion for starting a new history segment, preferably a predefined time span, such as thirty days have passed since the last change-set was authored. The start of a new segment may be indicated by a history audit packet, which is created at the end of the segment and ensures that the contents of the segment cannot be manipulated. The selection of the time span should be aligned to organisational policy so that once a group member loses access to a group and a new segment has begun, operators of the system can verify that a server administrator has not colluded with the departing group member to manipulate data in the history. Because the time span may be mainly relevant for organisational policies, rather than innate thresholds of the cryptographic primitives being employed, it will be readily understood that any time span is conceivable.
(f) Criteria for using a new key hash, such as the creation of a change-set that adds a file, a change-set that removes a file, a group change that adds a member, and/or a group change that removes a member.
(g) An augmentation to the transmission protocol, comprising one or more of:
   - A protocol for transmitting a new history audit structure to the server;
   - Notification to clients informing them of a new history audit structure;
   - An optional protocol for requesting all packets belonging to a particular history segment by providing the key hash of the last history audit structure.

Servers and/or clients implementing the integrity scheme preferably must reject changes that do not fulfill the criteria of (e) and (f), and preferably in addition must reject changes that follow a group removal for which no new secret key has been distributed.

### Verification scheme:

Certain embodiments may use a verification scheme that maintains the current verification state of each segment of the history. This scheme may comprise any or all of the following:
- A verification data structure that relates protocol structures (i.e. group changes, change-sets and/or history audits) by their key hash and signature digest hash to form a particular verification state (either authentic or unknown). Therein, the verification scheme may ensure the authenticity of the particular structures. Given that the verification state of a particular structure depends on its predecessors (the structure with the signature digest that relates to the key hash that is quoted in the structure under verification), it should be appreciated that the verification scheme is built on top of the integrity scheme.
- State information that stores the verification state of a structure and its predecessors, with the verification state pertaining to the signature verification operation of the particular structure combined with the signature verification of the structure that introduced the referenced key hash (as in Table 1). At its simplest, this may be realized as two associative data structures:
   (1) a map from signature digest of a structure to a verification state, where the verification state is either authentic or unknown.
   (2) a map from a signature digest, to the signature digest of the structure that introduces the referenced key hash.
   The advantage of this these maps may be that it easy to determine whether a particular referred to key hash represents an authentic structure or not, and may make it very easy to update the structure with the results of the verification operation (insert the result of the verification into the first map, and insert the parent relation in the second).
- An operation that updates the data structure with a history audit, change-set and/or group change structure, marking whether it is valid and introducing new valid key hashes where necessary (as in Table 2 illustrated below).
   Each time the client receives a structure from the server, it may update the verification structure as in the following:
   (1) verify the signature of the structure, and retaining the result
   (2) looking up the verification result of the structure's predecessor by looking up the key hash from the structure in the first map - if there is no existing entry, then an empty key hash is considered valid, and any other key hash is considered invalid.
   (3) combining the verification result from (1) and (2) and recording it in the first map using the hash of the signature digest (key hash) and the calculated verification result.
   (4) inserting the parent relation in to the second map by hashing the signature digest, and inserting it with the key hash of the structure.
   The advantage of the aforementioned may be that that the client may have all the information needed to determine whether a particular structure (and all its predecessors) is cryptographically valid, which is necessary when deciding whether a client should reject an incoming packet or not.
- An operation that checks whether a particular key hash is valid by looking up its node in the tree. E.g. when a client may want to re-check whether a particular structure is valid, for example in step (2) (looking up the verification result of the structure's predecessor by looking up the key hash from the structure in the first map), it simply may need to hash the signature digest, and then look up the verification result from the first map. This may provide authenticity information about the change (and all its predecessors) to the client, in one easy step.

An exemplary verification data structure is illustrated in the following Table 1:

**Table 1**

| Key | Value |
|---|---|
| 0x00 | Signature Digest: <empty> |
| | Key Hash: 0x00 |
| | State: Valid |
| 0x0A | Signature Digest: 0x0A |
| | Key Hash: 0x00 |
| | Signature Valid: yes |
| | State: Valid |
| 0xB0 | Signature Digest: 0xB0 |
| | Key Hash: 0x00 |
| | Signature Valid: yes |
| | State: Valid |
| 0xFA | Signature Digest: 0xFA |
| | Key Hash: **0xB0** |
| | Signature Valid: no |
| | State: Invalid |
| 0xCF | Signature Digest: 0xCF |
| | Key Hash: 0xFA |
| | Signature Valid: yes |
| | State: Invalid |

An example of inserting an entry into the verification data structure is illustrated in the following Table 2:

**Table 2**

| Key | Value |
|---|---|
| 0x00 | Signature Digest: <empty> |
| | Key Hash: 0x00 |
| | State: Valid |
| ... | ... |
| 0xB0 | Signature Digest: 0xB0 |
| | Key Hash: 0x00 |
| | Signature Valid: yes |
| | State: Valid |
| **0xCF** | **Signature Digest: 0xCF** |
| | **Key Hash: 0xB0** |
| | **Signature Valid < = <verify signature >** |
| | **State < = Signature Valid && 0xB0 State = = Valid** |

### Key distribution scheme:

Certain embodiments may use a key distribution scheme that ensures that each group member is in possession of the secret key already mentioned further above, which is used to encrypt the documents of the group. The scheme may also ensure that only members of the group have possession of the secret key.

Accordingly, embodiments of the invention provide a method for generating the secret key(s), a method for identifying the key(s), a data structure for securely storing the key(s), and/or an augmentation to the group change structure for distributing the key(s) to the group members.

The realization of the embodiment(s) may comprise all or a subset of the following:
(a) Secret key generation, preferably performed using a secure random number generator yielding keys of 64-bytes in length.
(b) A unique identifier of each secret key, preferably by way of an integer that is incremented between successive secret keys.
(c) An "encryption keys" data structure that uses public key encryption to confidentially store a secret key and optionally a unique identifier that can be used by a group member to decrypt encrypted documents. In other words, the secret key is encrypted using the public encryption key ("encryptor") of the user to which the secret key is to be provided. This ensures that only this user can decrypt the secret key using his secret decryption key ("decryptor"), as illustrated in one example in Fig. 10.
(d) Augmentation of the group change structure, so that it comprises the "encryption keys" structure that provides public-key encrypted secret keys to each group member.
(e) Criteria for generating new secret keys, preferably when one or more group members are removed from the group. Client software that detects a group change in which a member removes themselves should generate an additional group change prior to uploading a new change to the server, which contains a new secret key that is known only to the remaining members. In addition, clients and servers should reject packets following a group change wherein a member removes themselves, and a new secret key has not been distributed.

In the following, various procedures for implementing embodiments of the invention will be explained. It will be appreciated that the various procedure may be employed individually or in various combinations to achieve the technical advantages explained herein.

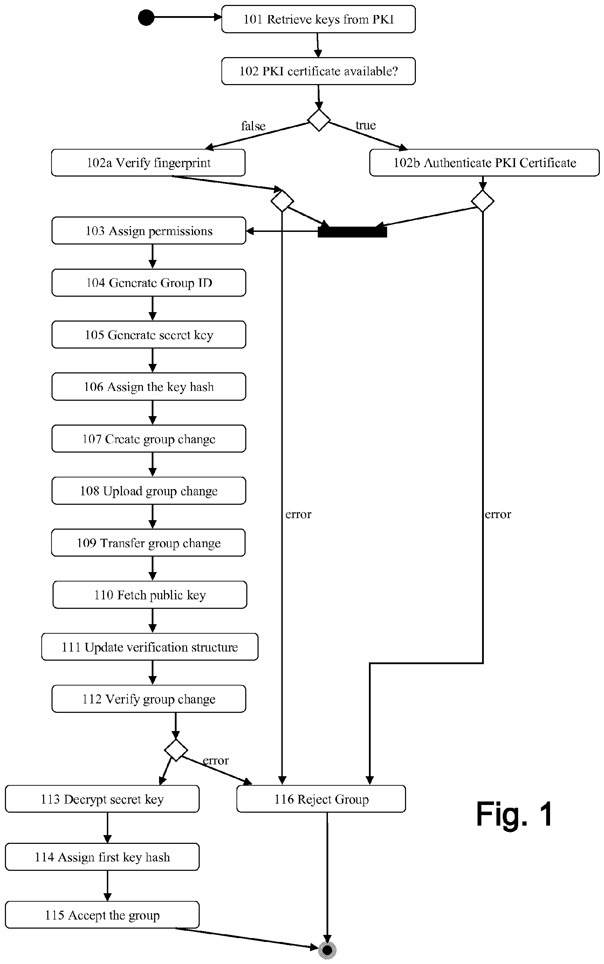

Fig. 1 illustrates a method for establishing a group of persons. Each group member is preferably represented by a public key in possession of a shared secret key (see further above). In step 101, one or more public keys, each representing a particular person for the group to be created, may be retrieved. The key(s) is/are preferably retrieved from a PKI (Public Key Infrastructure). In step 102, the authenticity of each public key may be verified, e.g. by confirming a corresponding key fingerprint with the owner of the public key (step 102a), or by authenticating a PKI certificate that has been issued to the public key (step 102b). If the authenticity of at least one of the public keys cannot be verified, the new group to be created is rejected and/or discarded (step 116). Otherwise, the method may proceed to step 103, where permissions are assigned to each member of the prospective group according to their respective roles (in accordance with the "permission scheme" further above). In step 104, a group identifier may be generated as specified in the "group change" section above. In step 105, a new secret key (preferably a symmetric key; see further above) may be generated and the secret key may be encrypted for distribution to the group members according to the key "distribution scheme" further above. Preferably, the secret key is to this end encrypted using all public encryption keys of the group members. There is one secret key while no group members are removed. This means there are n encryptions of this secret key where n is equal to the number of group members. A key hash may be assigned in step 106, which is preferably empty (such as an empty string). In step 107, the method may create a new group change data structure as explained further above and may digitally sign the group change structure using the private signing key of the user who wants to create the group according to the "group change" section above. The signed group change data structure is then uploaded to the server in step 108, preferably using the transmission scheme explained further above. As already explained elsewhere, the signed group change data structure may also be transmitted directly to (an)other client(s) in a peer-to-peer scenario.

The above steps 101-108 are preferably performed by a client computer associated with a user intending to create a new group. In step 109, the server may transfer the newly created group change data structure to the other members of the group. Preferably, each receiving member, i.e. its associated client computer, then performs a process according to the following steps:

In step 110, the public key of the group change author is fetched, e.g. from the PKI. Therein, the permissions scheme may provide a permission level that may be equivalent to the "owner". This information, or the signing key of the signature may be used to identify the owner. In step 111, the method may create a verification structure, e.g. as explained in the "verification scheme" further above, and may update the structure with the first group change. In step 112, the group change data structure is verified according to the "verification scheme" further above. This preferably comprises verifying the signature included in the group change data structure using the public verification key of the author. If the verification fails, the group is rejected and/or discarded (step 116). Therein, the discarding of a group may be a client-only activity. Primarily because the server may be considered to be a likely attacker in this scenario, so it may be unwise to continue dealing with the server. Otherwise, the method proceeds to step 113, where it decrypts the secret key distributed in the group change data structure and retains the secret key for following changes, e.g. by storing it locally on the client. The decryption preferably uses the private decryption key of the receiving user. In step 114, the first valid key hash may be assigned to be the hash of the signature digest from the first group change. This may be an optimisation with the intention that when a client processes a significant change, it may create the equivalent key hash by hashing the structures signature digest and retains this value, so that it may use it when sending following structures to the server - these new structures may be based on the key hash of this significant structure. Practically the client may be able to recalculate this, but most realizations may likely cache this information. Lastly, the group is accepted in step 115.

Those skilled in the art will appreciate that the above method may be performed by different client computers (i.e. a first client performing steps 101-108, and one or more second clients performing steps 110-115). Alternatively, each client computer may be configured to perform all of the above steps, depending on its role in the process (i.e. sender or receiver). Further, it will be appreciated that the above method may be performed independently of or in conjunction with the other methods described herein, depending on the particular embodiment.

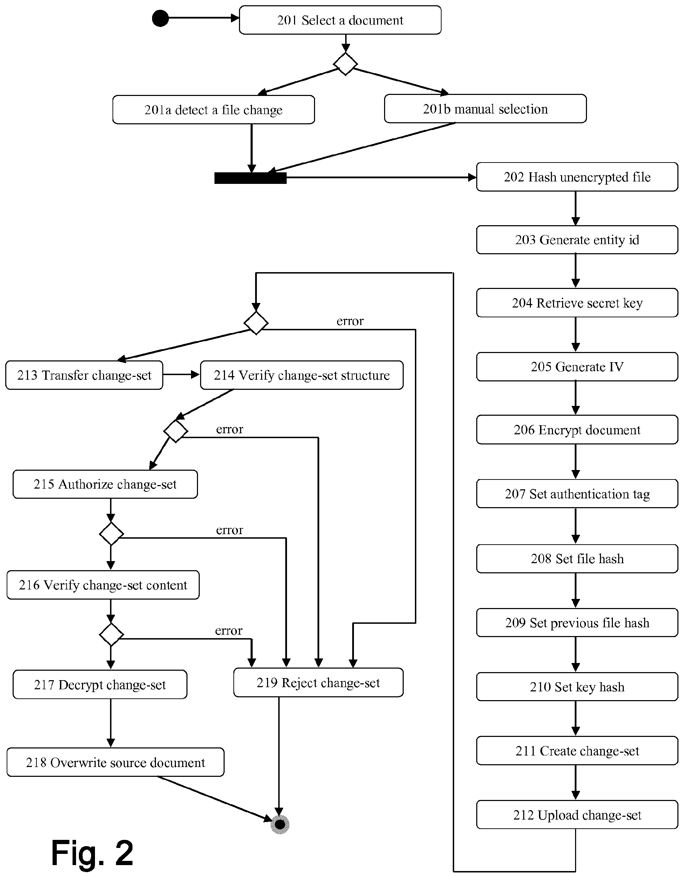

Fig. 2 illustrates a method for encrypting and authenticating a new document (also referred to as "file" herein) by one client and transferring it to another client. In step 201, the document (which may comprise any sort of electronic data comprising text, images, video, or the like) may be selected. This may preferably be done either by detecting a file change, e.g. by designating a data location wherein changes to documents will be automatically synchronized with group members (step 201a), or by manual selection, e.g. by a user-interface that enables a user to select a file that should be synchronized with group members (step 201b). In step 202, the unencrypted file may be hashed, e.g. in block-wise fashion. The hashing may be done e.g. using SHA-384 and a block size of 64k. It will be readily understood that also other hash algorithms or block sizes may be used. The hashing may also comprise locally retaining the hash or list of hashes on the client for efficient change detection. In step 203, a document identifier ("entity id") may be generated as specified in the "change-set" section (see further above). In step 204, a previously retained secret key may be retrieved from the group. In step 205, a new initialization vector (IV) for the encryption operation may be generated (as explained in the *"change set data structure"* section). In step 206, the data of the document may be encrypted using the secret key and/or IV from steps 204, respectively 205. The encryption may be done e.g. using AES-GCM, preferably reserving the first 4k-block of the resulting cipher-text for file metadata such as filename and path. In step 207, "integrity info" (such as a MAC as explained further above) may be assigned to the output of the integrity scheme or authenticated encryption scheme (step 205). Therein, the "integrity info" may be an integer of a specified number of bits that is the output of the AES-GCM authenticated encryption operation and may be used in the authenticated decryption operation that determines whether the cipher-text was manipulated or not, or alternatively a Message Authentication Code (MAC), depending on the precise integrity scheme employed.

In step 208, a file hash may be assigned by hashing the resulting cipher-text of step 205. The hashing may be done by using SHA-384, but other compression functions that provide similar security could be used. A previous file hash may be assigned in step 209, which is preferably empty (such as an empty string). In step 210, the key hash from the verification scheme may be assigned, as explained in the "verification scheme" data structure further above. Preferably, as previously described, the hash of the signature digest of the last significant structure should be retained and set as the key hash. Alternatively, clients can recalculate the necessary key hash, by going through the source structures, or augmenting the verification structure to include a sequence of key hashes of significant structures - i.e., every time a significant structure may be processed, another item may be added to the sequence that is used when creating structures for transmission to the server. In step 211, a change-set structure may be created and digitally signed using the private signing key of the user who wants to encrypt and authenticate a new document. In step 212, the signed change-set structure may be uploaded to the server. The uploading may be done using the "transmission scheme", see further above. In case this uploading step fails, the change-set may be rejected (step 219). As already explained elsewhere, the signed change-set data structure may also be transmitted directly to (an)other client(s) in a peer-to-peer scenario.

The above steps 201-212 are preferably performed by a client computer associated with a user intending to encrypt and authenticate a new document. In step 213, the server may transfer the change-set to the other members of the group, but equally a peer-to-peer based mechanism could be used to transfer the change-set. Accordingly, in the realization, the transmission scheme may provide information in the connection establishment process that specifies to which group particular change-sets belong (by providing the group id). Specifically, logical communication channels may be created that may provide information about one group each, even though there may exist only one physical connection to the server.

The other members of the group (preferably disjoint from the one who performed the steps 201-212) may then each perform the following process:
In step 214, the respective receiving client may verify the change-set. This verification may be done according to the "verification scheme", see further above. In case this verification step fails, the change-set may be rejected (step 219). Otherwise, in step 215, it may be checked whether the change-set author is authorized to make a change according to the "permission scheme", see further above. This may involve ensuring that the change-set was authored by a current member of the group with write access (see section *"permissions scheme"*). In case the change-set author is not authorized to make a change, the change-set may be rejected (step 219). Otherwise, in step 216, the cipher-text of the change-set payload may be hashed and verified that it matches the file hash specified in the change-set structure. The hashing may be done e.g. using SHA-384. In case this verification fails, the change-set may be rejected (step 219). Otherwise, in step 217, the (authenticated) decryption operation may be performed using the secret key previously retained and the IV specified in the change-set. This decryption may be done e.g. using AES-GCM. At this point, the method has obtained the unencrypted content of the document. In step 218, a plain-text source file corresponding to the document which may already exist on the client may be overwritten with the decrypted data from the change-set.

Those skilled in the art will appreciate that the above method may be performed by different client computers (i.e. a first client performing steps 201-212, and one or more second clients performing steps 214-218). Alternatively, each client computer may be configured to perform all of the above steps, depending on its role in the process (i.e. sender or receiver). Further, it will be appreciated that the above method may be performed independently of or in conjunction with the other methods described herein, depending on the particular embodiment.

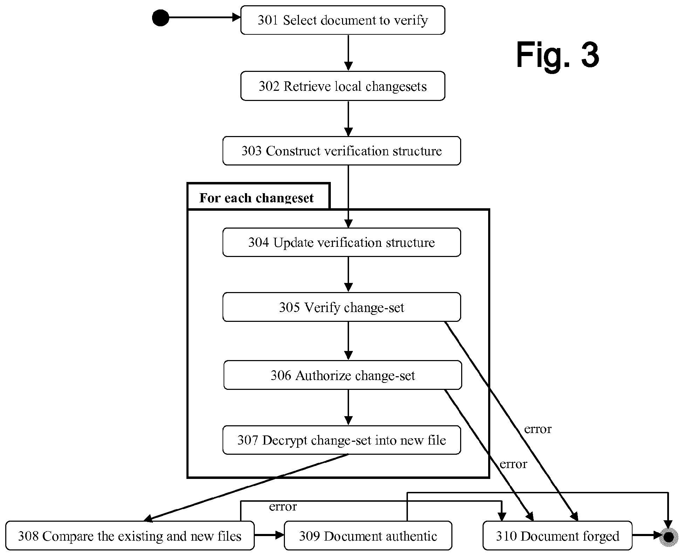

Fig. 3 illustrates a method for verifying the authenticity of a document. Therein, the full process of verifying the document may take place as part of the main method of an embodiment, so when the user would like to revert to a previous version of the file. On initialization of the system, each file preferably undergoes a full verification, but otherwise, the current state of a file may be considered to be "verified", and only incremental changes may be verified when new changes arrive from the server.

In step 301, a document may be selected to be verified, e.g. from a user interface provided by an embodiment. However, it may be considered to be one of the documents that the group agreed to work on, as described further above. In step 302, one or more local change-sets that together completely represent the last version of the file may be retrieved. This retrieval may be executed by the client, and so they may be locally available to the client system. However, conceivably, a client may request the change-sets for a particular file from the server on demand.

An empty verification structure may be constructed in step 303. The following steps 304-307 may be executed in a loop for each change-set, preferably beginning with the earliest committed. In step 304, the verification structure may be updated according to the "verification scheme" explained further above until the key hash of the change-set is visible. Signature verification may be performed on each change-set in-turn, the verification result of the predecessor structure may be requested from the first map of the verification scheme, and the final verification state may be recorded in the first map. This may continue for each change-set until it reaches the last change-set, and if that change-set is verified the file may be considered to be verified as authentic, but not necessarily authorized (as this may require the permission scheme). In step 305, the change-set may be verified according to the "verification scheme", see further above. In case the verification of step 305 fails, the document may be determined as being forged (step 310). In the case that a document has been forged, the version mechanism may be used to roll-back the file to a previous version - the point at which the verification scheme specifies that the group and document are valid. Technically, this may happen by finding the last change-set that is considered to be valid, and then collecting the previous change-sets until the change-sets represent one full version of the file. This process may continue until a version of the file with no falsified change-sets is found. Once this list of change-sets has been obtained, they may be decrypted and may overwrite the local file, so that it is rolled back to an authentic version. In step 306, it may be checked whether the change-set author is authorized to make a change according to the "permission scheme". If this authorization step fails, the document may be determined as being forged (step 310). In step 307, the change-set may be decrypted into a new file if it is the first change-set, while the following change-sets are decrypted and the decrypted content is appended to the file. By collecting all the group changes, the client may establish a user list that contains a list of key identifiers and access levels, and using this the client can determine whether a change-set is authorized by whether it was authored by a user that was a member of the group at the point that the change was authored. The source document (i.e. the document that was initially selected for being verified) and the new file may be compared in step 308 to check whether they are equal. If this comparison step (step 308) fails, the document may be determined as being forged (step 310). In step 309, the document may be determined as being authentic.

Those skilled in the art will appreciate that the above method may be performed by a client computer. Further, it will be appreciated that the above method may be performed independently of or in conjunction with the other methods described herein, depending on the particular embodiment.

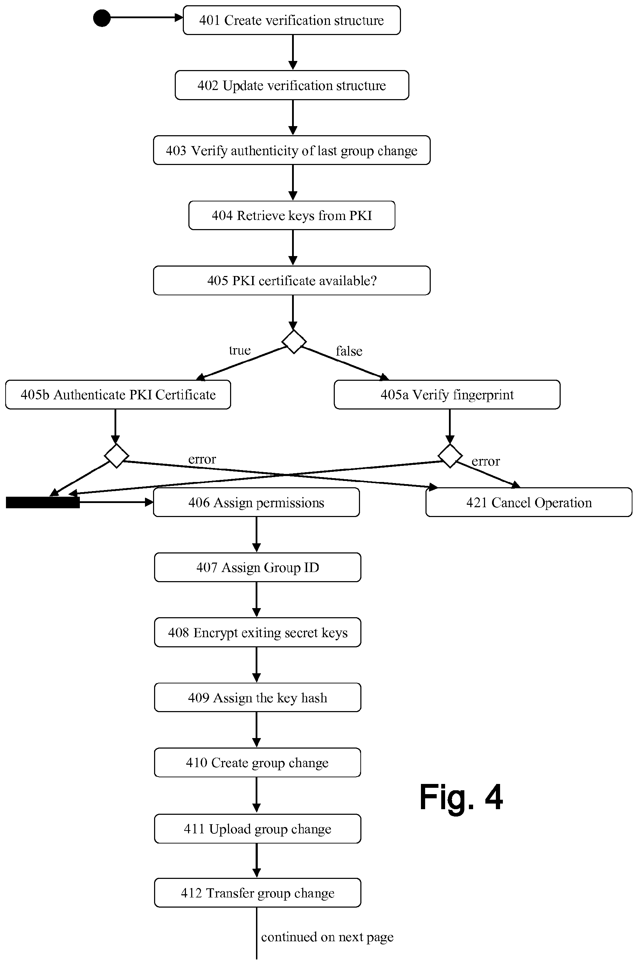

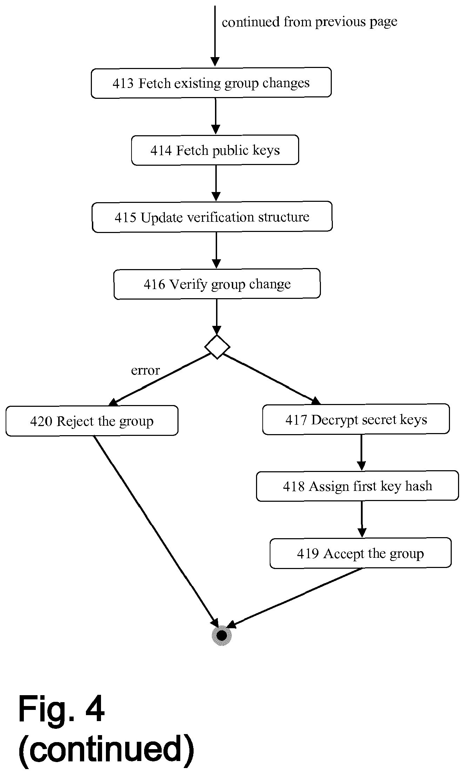

Fig. 4 illustrates a method for adding a person to the membership of a group. In step 401, an empty verification structure may be created, as in the section "verification structure", see further above. The client software may need the two maps (see section *"verification scheme"*), and for the purposes of the operation they may be cleared and not re-used from previous operations. In step 402, the verification structure may be updated according to the "verification scheme" with all structures known to the client (i.e. group changes, change-sets and history audit structures). In step 403, the authenticity of the last group change may be verified. This verification step may be done e.g. using the verification scheme. This may involve verifying the authenticity of each structure that leads up to the key hash that the group change is based on, then using the verification scheme to process the group change, i.e.:
(1) verify the signature of the group change
(2) verify that the signature of every preceding change.
In step 404, one or more public keys representing the particular persons for the prospective new members may be retrieved. This retrieval may be done e.g. from a PKI. In step 405, the authenticity of each public key may be verified by e.g. either confirming the key fingerprint with the owner (step 405a), or authenticating a PKI certificate that has been issued to the public key (step 405b). In case this verification step fails, a cancel operation may be executed (step 421). This means that the client software of an embodiment may abandon the attempt to try and add a person to the group, and inform a user that the process can't be completed. Because the cached data structures may not be modified in this operation, there isn't really any rollback needed apart from discarding the results. In step 406, permissions to each prospective member of the group may be assigned according to their respective roles, e.g. according to the "permission scheme", see further above. In step 407, a group identifier from the last group change may be assigned. The existing secret keys for distribution to the new group members may be encrypted in step 408. This encryption step may be done according to the "key distribution scheme", see further above. This may involve using a public key encryption scheme to encrypt the secret key for each member, and include the enveloped key and the associated secret key identifier (the previously discussed integer) in a group change. Therein, it may be important that all encryption keys are distributed to all members as old data may not be re-encrypted when a group member leaves, which requires a new secret key. In step 409, the key hash from the verification structure may be assigned. In step 410, a new group change structure may be created and signed using the private signing key of the user authoring the process. This creating and signing step may be done according to the "group change data structure" section, see above. In step 411, the signed group change may be uploaded to the server using the transmission scheme. As already explained elsewhere, the signed group change data structure may also be transmitted directly to (an)other client(s) in a peer-to-peer scenario.

The above steps 401-411 are preferably performed by a client computer associated with a user intending to add a person to the membership of the group. In step 412, the server may transfer the group change to the other members of the group, i.e. to their respective clients. The following steps 413-420 may then be performed by the receiving clients.

In step 413, the respective receiving client may fetch any previous group changes using the transmission scheme, which may alternately provide a mechanism to retrieve changes from other clients using a peer-to-peer connection. Therein, the changes may be stored in a persistent storage on the server, or retrieved from other clients. These changes may be fetched from the server using the protocol to retrieve change-sets, alternatively, the realization of the embodiment may use the notification of the transmission protocol to send all group changes to newly joining members.

In step 414, the public key of the group change authors may be fetched. In order to perform the signature verification of the structures, the client software may require to request the public key of each author. However, this may normally be done when processing the group change. One could reason that only those listed in the group change may be permitted to sign changes, so those are the only changes that one may need to fetch. This fetching step may be done e.g. by fetching the public keys from a PKI. In step 415, a new verification structure may be created and updated with available group changes according to the "verification scheme". Therein, the digital signature of each change may be verified in sequence, and the result recorded in the appropriate maps of the verification scheme (see section *"verification scheme"*). Each successive change may consider the verification state of the previous changes, by looking up the verification state from the verification scheme map with the key hash quoted in the structure. In step 416, the authenticity of the group change may be verified using the "verification scheme". In case this verification step (step 416) fails, the group may be rejected and/or discarded (step 420). Therein, in the case that a joining group member discovers that the group has been compromised, no further communication may be made to the server or the other members. The rationale is that the server may be one of the attacking parties, and other genuine clients will reach the same conclusion when they receive the data that the joining client retrieved.

In step 417, the secret keys distributed in the group change may be decrypted and retained for following changes, according to the "key distribution scheme", see above. In step 418, the first valid key hash may be assigned to be the hash of the signature digest from the first group change. This may be an optimization so that clients can retain the key hash that is necessary for the next changes that it sends to the server, or other clients in the peer-to-peer scenario. Specifically, the hash of the signature digest of the last significant change may form the key hash of the next packets to be submitted to the server, or other clients. In step 419, the group may be accepted.

Those skilled in the art will appreciate that the above method may be performed by different client computers (i.e. a first client performing steps 401-411, and one or more second clients performing steps 413-420). Alternatively, each client computer may be configured to perform all of the above steps, depending on its role in the process (i.e. sender or receiver). Further, it will be appreciated that the above method may be performed independently of or in conjunction with the other methods described herein, depending on the particular embodiment.

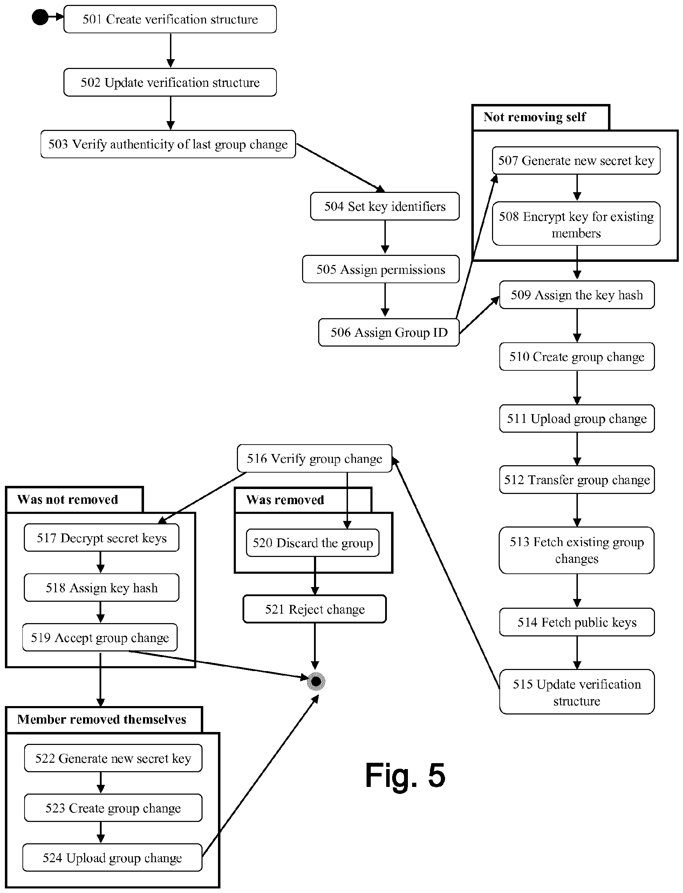

Fig. 5 illustrates a method for removing one or more persons from the membership of a group. In step 501, an empty verification structure may be created, as in the section *"verification structure",* see further above. This may signify that the maps used by the verification structure should be created again, and any previous structure should be discarded to avoid contaminating the results. In step 502, the verification structure may be updated according to the "verification scheme" with all structures known to the client, e.g. change-sets, group changes, and history audit structures that are known locally to the client. Alternatively, the client may also request this information from the server. However, it may be expected that efficient clients will retain this information locally. In step 503, the authenticity of the last group change may be verified. This may involve creating a verification scheme structure, and applying the change-sets, group changes and history audit's necessary for the group change's key hash to be verified, then combining this result with the digital signature verification of the group change, and verifying that all the changes (including the group change) were verified using the permissions scheme, which may build up the user list using the group changes, and may determine whether each change was authored by a user that was a member of the group and had the right permissions at the time that the change was authored. In step 504, the key identifier(s) of the member(s) to be removed may be set, e.g. by recording the key identifier in the group change, and setting the access level of this use to no access. In step 505, permissions to each removed member of the group may be assigned to "no access", according to the "permission scheme", see above. In step 506, a group identifier from the last group change may be assigned. In case the member is not removing himself from the membership, the method goes on to step 507. In case the member is removing himself from the members of the group, the method goes on to step 509. In step 507, a new secret key may be generated. In step 508, the newly generated secret key may be encrypted for the remaining members of the group e.g. using the "key distribution scheme". Specifically, the current member list (from the permissions scheme) may be retrieved and using the key identifier of each member, their public key may be retrieved (either locally or from the PKI), and using a public key encryption scheme the secret key may be encrypted for the user and recorded in the group change. In step 509, the key hash from the verification structure may be assigned. Again, the presence of the key hash in the verification may be an optional feature. The client may calculate the key hash from the last significant packet (by hashing its signature digest) and retain the value for sending new packets the server (or other clients, in the peer-to-peer scenario), or alternatively may recalculate this information on demand by following the list of group changes, change-sets and history audits. In step 510, a new group change structure may be created and signed, preferably using the private signing key of the author of the group change. This creating and signing step may be done according to the "group change data structure" section, see above. In step 511, the signed group change may be uploaded to the server using the transmission scheme, or alternatively it may be sent to other clients directly in a peer-to-peer scenario.

The above steps 501-511 are preferably performed by a client computer associated with a user intending to remove a person from the membership of the group. In step 512, the server may transfer the group change to the other members of the group. The remaining steps that follow are then preferably performed by each receiving client computer.

In step 513, the respective client may fetch any previous group changes using the transmission scheme, e.g. from a server retaining all changes in persistent storage, or alternatively retrieve these changes from other clients in the peer-to-peer scenario. In step 514, the one or more public keys of the group change author(s) may be fetched (depending on how many group changes have already occurred and by whom). This fetching step may be done e.g. by fetching the public key(s) from a PKI. In step 515, the verification structure may be created and updated with available group changes according to the "verification scheme". In step 516, the authenticity of the group change may be verified using the "verification scheme". In case this verification step (step 516) fails, the group may be discarded at step 520, wherein *"was removed"* refers to whether the change is being processed by the user that was removed, or it is processed by one of the other group members. In this case the group may be rejected at step 521. In case this verification step (step 516) was successful, the method goes on to step 517. In step 517, the secret key(s) distributed in the group change may be decrypted and retained for following changes, according to the "key distribution scheme", see above. In step 518, the first valid key hash may be assigned to be the hash of the signature digest from the first group change. This may involve retaining the hash of the digital signature digest so that it can be used as the key hash in following packets. Alternatively, this may be recalculated later by ordering each of the change-sets, group changes and history audits according to the integrity scheme, and hashing the digital signature digest of the final structure. In step 519, the group change may be accepted. In steps 522-524, the case is handled that a group change that was processed contained a membership change wherein the member removed itself. When this is the case, clients should create a new group change that generates a new secret key and distributes it to the other remaining members according to the "key distribution scheme". The timing of this action may be when the client next tries to submit a change to the server, but it could alternatively take place directly after step 519, if a mechanism for deciding which client should make the change is provided.

Those skilled in the art will appreciate that the above method may be performed by different client computers (i.e. a first client performing steps 501-511, and one or more second clients performing steps 513-521). Alternatively, each client computer may be configured to perform all of the above steps, depending on its role in the process (i.e. sender or receiver). Further, it will be appreciated that the above method may be performed independently of or in conjunction with the other methods described herein, depending on the particular embodiment.

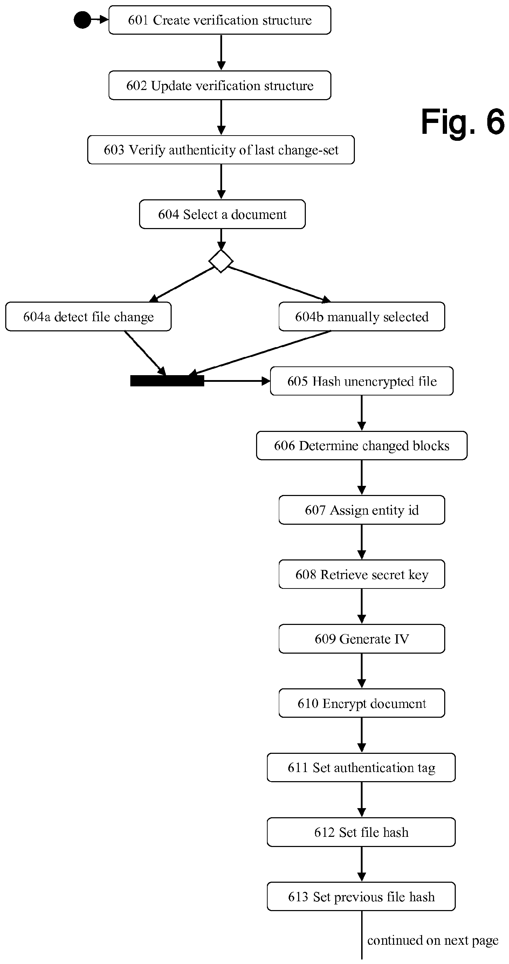

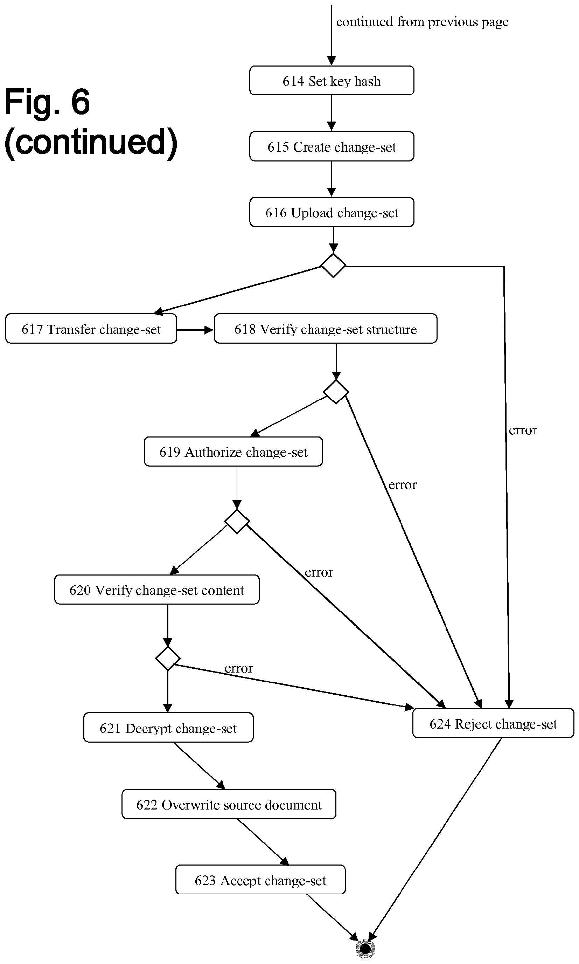

Fig. 6 illustrates a method to modify an existing document and transfer the change to another client. The overall process may be similar to that of Fig. 2 (where a new document is created and transferred), but will nevertheless be explained in the following for the sake of completeness. In step 601, an empty verification structure may be created. The verification structure may be updated in step 602 according to the "*verification scheme*" with all structures known to the client. In step 603, the method may verify the authenticity of the last change-set for this document using the "*verification scheme*". A previously out-sourced document may be selected for update in step 604, e.g. by either (a) designating a data location wherein changes to documents will be automatically synchronized with group members (step 604a), or (b) a user-interface that enables a user to select a file that should synchronized with group members (step 604b). The unencrypted file may be hashed in block-wise fashion using SHA-384 and a block size of 64k in step 605. Step 606 may determine the changed blocks by comparing the hash list from step 602 with the previously retained hash list. The method may assign the document identifier ("entity id") from the previous change-set for this document in step 607. In step 608, the previously retained secret key may be retrieved from the group. In step 609, a new initialization vector (IV) for the encryption operation may be generated if mandated by the encryption scheme (e.g., AES-GCM). The data of the document may be encrypted in step 610 using the secret key and/or IV from step 608 and/or step 609, e.g. using AES-GCM, e.g. using the blocks determined in step 606. In step 611, the method may assign the authentication tag to the output of the authenticated encryption operation from step 610. In step 611, the file hash may be assigned by hashing the new cipher-text blocks, and merging those hashes with the cipher-text hashes from the previous change. The previous file hash may be assigned to the file hash of the previous change-set in step 613. Step 614 may assign the key hash from the verification scheme data structure. Step 615 may create and digitally sign the change-set structure. In step 616, the signed change-set structure may be uploaded to the server using the transmission scheme. As already explained elsewhere, the signed change-set data structure may also be transmitted directly to (an)other client(s) in a peer-to-peer scenario.

The above steps 601-616 are preferably performed by a client computer associated with a user intending to modify an existing document. In step 617, the server may transfer the change-set to the other members of the group. The remaining steps that follow are then preferably performed by each receiving client computer.

In step 618, the respective receiving client may verify the change-set according to the verification scheme. In step 619, it may be checked whether the change-set author is authorized to make a change according to the permission scheme. The cipher-text of the change-set payload may be hashed in step 620, e.g. using SHA-384 and it may be verified that it matches the file hash specified in the change-set structure. In step 621, the authenticated decryption operation may be performed, e.g., using the secret key previously retained, e.g., using AES-GCM with an IV specified in the changeset.

Step 622 may overwrite the plain-text source file with the decrypted data from the change-set using the data ranges specified in the change-set, and the change-set may be accepted in step 623. In case any of the above steps fails, the change-set may be rejected in step 624 as illustrated in Fig. 6.

Those skilled in the art will appreciate that the above method may be performed by different client computers (i.e. a first client performing steps 601-616, and one or more second clients performing steps 618-624). Alternatively, each client computer may be configured to perform all of the above steps, depending on its role in the process (i.e. sender or receiver). Further, it will be appreciated that the above method may be performed independently of or in conjunction with the other methods described herein, depending on the particular embodiment.

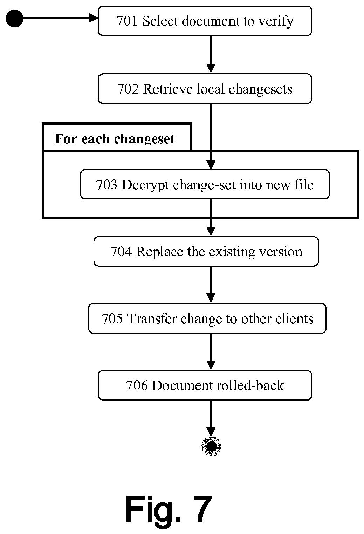

Fig. 7 illustrates a method to roll-back a document to a previous version. In step 701, a document to roll-back is selected. Step 702 may retrieve the local change-sets that completely contain the desired version of the file. Each change-set may be decrypted into a new file in step 703. Step 704 may replace the existing version of the document with the new document. In step 705, the change may be transferred according to the "modify document" method illustrated in Fig. 6, and in step 706, the document has been rolled back.

Those skilled in the art will appreciate that the above method steps may be performed by a client computer. It will be appreciated that the above method may be performed independently of or in conjunction with the other methods described herein, depending on the particular embodiment.

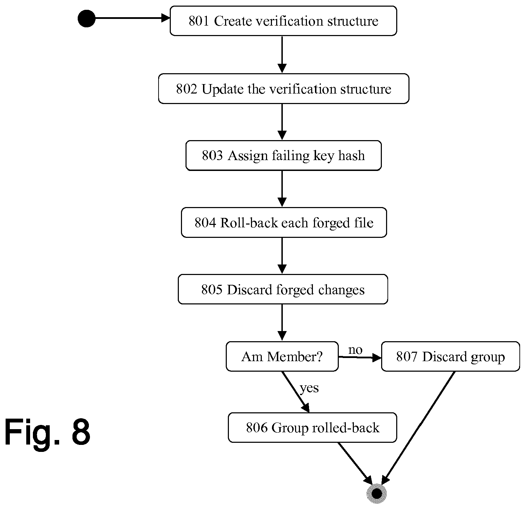

Fig. 8 illustrates a method to roll-back a group to a previous version. In step 801, an empty verification structure may be created. The verification structure may be updated until a structure fails verification in step 802. Step 803 may assign the failing key hash from the verification scheme. Step 804 may roll-back each file that was created using the failing key hash or an unknown key hash. The remaining changes in the group may be discarded in step 805. Depending on whether a group shall be rolled back to a point before a member was a member of the group (as indicated by *"am member"* in Fig. 8, then one may need to discard the group because one would not be able to put it into a working state where said member may be a member of the group) the group is either rolled-back (step 806) or discarded (step 807).

Those skilled in the art will appreciate that the above method may be performed by a client computer. It will be appreciated that the above method may be performed independently of or in conjunction with the other methods described herein, depending on the particular embodiment.

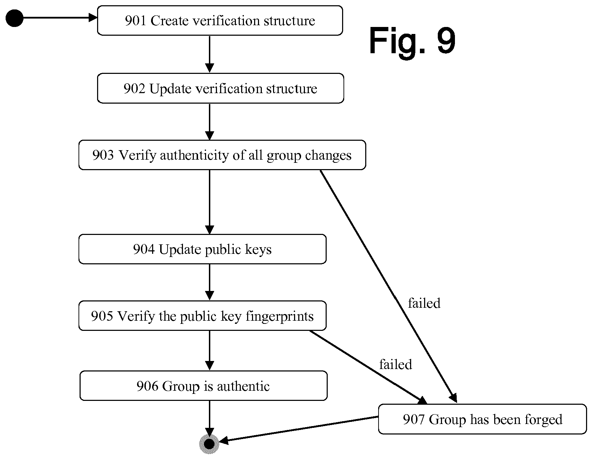

Fig. 9 illustrates a method for verifying the integrity of a group. This step may be carried out when performing the main method of an embodiment (e.g., reverting a file to a previous version), and also when initializing the data when the client starts, so that it can be ensured that the system is in a verified state, and when new changes are retrieved, only incremental changes are necessary. In step 901, an empty verification structure may be created. Step 902 may update the verification structure according to the verification scheme with all structures known to the client. The authenticity of the last group change may be verified in step 903 using the verification scheme. Step 904 may update the public keys for each member of the group. Therein, the client software may retrieve public keys from the PKI server for the key identifiers of the group members. If the key for the group member is no longer the same (e.g. as the server has changed the key), then the member may be considered to be no longer a member of the group and new keys are no longer distributed to that user, alternatively, client software may be able to disband the group, considering it to be compromised. Step 905 may ensure that the fingerprints of the known verified keys match the fingerprints of the downloaded keys. The fingerprint of the downloaded key may be derived using a commonly understood technique, which depends on the type of key (RSA or ECC), and this fingerprint may be compared to the fingerprint that was recorded in the group change, and maintained by the user list that is created as part of the permissions scheme. In step 906, the group is determined to be authentic. In step 907, it is determined that the group has been forged.

Those skilled in the art will appreciate that the above method may be performed by a client computer. The server may be able to verify the key fingerprints, but this may not be required. It will be appreciated that the above method may be performed independently of or in conjunction with the other methods described herein, depending on the particular embodiment.

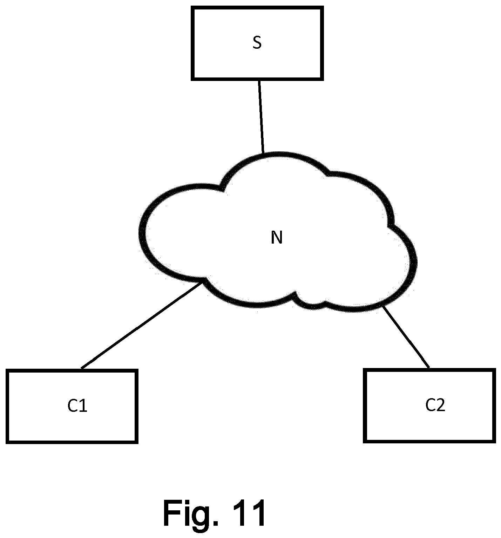

Fig. 11 illustrates a hardware architecture configured for implementing various combinations of the embodiments of the methods explained herein in an exemplary client/server environment. As can be seen, the system comprises at least one server or server system S and any number of client computers, wherein Fig. 11 shows two exemplary client computers C1 and C2. The server S and the client computers C1 and C2 are communicatively coupled, e.g. by a network N, which may be e.g. a corporate network, or a public network such as the Internet. As already explained, embodiments of the invention are likewise applicable to a peer-to-peer environment where the client computers communicate directly with one another without the need for a server.

In one or more exemplary aspects, the functions, methods and/or parts thereof described herein may be implemented in hardware, software, firmware, or any combination thereof. If implemented in software, the functions may be stored on or transmitted as one or more instructions or code on a computer-readable medium. Computer-readable media include both computer storage media and communication media including any medium that facilitates transfer of a computer program from one place to another. A storage media may be any available media that may be accessed by a computer.

## Claims

1. A method for verifiable version control performed by a client computer, the method comprising:
encrypting (206; 610) at least a part of the content of a file into a change-set data structure, each change-set describing the difference between the last version of the file and a new version, using a secret key shared among a plurality of users; and
signing (211; 615) the change-set data structure using a private signing key of a user of the client computer;
wherein the change-set data structure comprises a hash taken over a signature digest of a last significant change, wherein a significant change is one of: a change-set that adds a new file, a change-set that removes a file, a group change that adds a new member, and/or a group change that removes a member.

2. A method for verifiable version control performed by a client computer, the method comprising:
receiving (213; 617) a change-set data structure, each change-set describing the difference between the last version of a file and a new version;
verifying (214; 618) a digital signature of the change-set data structure using a public verification key of a user who created the change-set;
wherein the change-set data structure comprises a hash taken over a signature digest of a last significant change, wherein a significant change is one of: a change-set that adds a new file, a change-set that removes a file, a group change that adds a new member, and/or a group change that removes a member; and wherein the method further comprises:
verifying whether a hash taken over a signature digest of a last significant change matches said hash in the change-set data structure; and
decrypting (217; 621) an encrypted data portion of the change-set data structure to obtain the file using a secret key shared among a plurality of users.

3. The method of claim 1 or 2, wherein the change-set data structure further comprises one or more of:
a document identifier;
an initialization vector usable for encrypting and decrypting the file;
message authentication data;
a hash of the encrypted content of the file and/ or a hash over a previous version of the file;
an encrypted name of the file; and/or
a sequence number.

4. The method of any of the previous claims, further comprising the step of providing a key structure comprising a first key-pair and a second key-pair,
the first key-pair comprising a private signing key and a public verification key,
the second key-pair comprising a public encryption key and a private decryption key,
wherein the first and second key-pairs are preferably asymmetric key-pairs.

5. The method of claim 4, wherein the key structure is usable for encrypting the shared secret key, which is preferably a symmetric key.

6. The method of claim 4 or 5, wherein the public verification key of the first key-pair digitally signs the second key-pair, wherein the first key-pair uniquely identifies a user.

7. The method of any of the previous claims, wherein the encrypted data portion of the change-set data structure represents only a part of the content of the file which has been changed as compared to a previous version of the file.

8. The method of any of the previous claims, further comprising the step of providing a group change data structure comprising one or more of:
a group identifier;
one or more references to a public key of a user to be added to and/or removed from a group corresponding to the group change data structure;
a key fingerprint for each reference;
a digital signature;
a sequence number;
one or more secret keys usable for encrypting and decrypting files, wherein the one or more secret keys are encrypted by the encryption key of the second key-pair; and/or
one or more access permissions for users.

9. The method of any of the preceding claims, further comprising the step of providing a history data structure, wherein the history data structure comprises a sequence of history segments, each history segment comprising a sequence of group change data structures and/or change-set data structures;
wherein the group change data structure reflects a change of a user group, and the change-set data structure reflects a change of a file.

10. The method of claim 9, wherein each history segment further comprises a history audit data structure, preferably as a last structure in the sequence, the history audit data structure comprising:
a first hash identifying the previous history segment;
a second hash over all the structures in the history segment; and/or
a digital signature over the first and second hash.

11. The method of claim 10, wherein the second hash is ordered
firstly, by key hashes of the structures;
secondly, by a type of the structures, wherein preferably group change data structures have the highest priority, change-set data structures that add or remove a file have the next highest priority, and then change-set data structures that modify a file; and/or
thirdly, by a hash taken over a signature digest of the structure.

12. The method of any of the previous claims 9-11, comprising the step of starting a new history segment after a predefined time span, such as thirty days since the last change-set was created.

13. The method of any of the previous claims, wherein a blockchain is used to store the change-set data structure.

14. A computer program comprising instructions which, when the program is executed by a computer, cause the computer to implement a method as defined in any of the preceding method claims.

15. A client computer (C1; C2) configured for performing a method as defined in any of the preceding method claims.

16. A system comprising a plurality of client computers (C1; C2) according to claim 15.

## Patentansprüche

1. Ein Verfahren zur überprüfbaren Versionskontrolle, die von einem Client-Computer ausgeführt wird, das Verfahren umfassend:
Verschlüsseln (206; 610) mindestens eines Teils des Inhalts einer Datei in einer Änderungssatz-Datenstruktur, wobei jeder Änderungssatz den Unterschied zwischen der letzten Version der Datei und eine neue Version beschreibt, unter Verwendung eines geheimen Schlüssels, der von einer Vielzahl von Benutzern geteilt wird; und
Signieren (211; 615) der Änderungssatz-Datenstruktur unter Verwendung eines privaten Signaturschlüssels eines Benutzers des Client-Computers; wobei die Änderungssatz-Datenstruktur einen Hash umfasst, der über ein Signaturkürzel einer letzten signifikanten Änderung genommen wurde, wobei eine signifikante Änderung eine ist von: ein Änderungssatz, der eine neue Datei hinzufügt, ein Änderungssatz, der eine Datei entfernt, eine Gruppenänderung, die eine neues Mitglied hinzugefügt und/oder eine Gruppenänderung, die ein Mitglied entfernt.

2. Ein Verfahren zur überprüfbaren Versionskontrolle
die von einem Client-Computer ausgeführt wird, das Verfahren umfassend:
Empfangen (213; 617) einer Änderungssatz-Datenstruktur, wobei jeder Änderungssatz den Unterschied zwischen der letzten Version einer Datei und einer neuen Version beschreibt;
Verifizieren (214; 618) einer digitalen Signatur der Änderungssatz-Datenstruktur unter Verwendung eines öffentlichen Verifizierungsschlüssels eines Benutzers, der den Änderungssatz erstellt hat;
wobei die Änderungssatz-Datenstruktur einen Hash umfasst, der über ein Signaturkürzel einer letzten signifikanten Änderung genommen wurde, wobei eine signifikante Änderung eines der Folgenden ist:
ein Änderungssatz, der eine neue Datei hinzufügt, eine Änderungssatz, die eine Datei entfernt, eine Gruppenänderung, die ein neues Mitglied hinzufügt, und/oder eine Gruppenänderung, die ein Mitglied entfernt; und wobei das Verfahren ferner umfasst:
Verifizieren, ob ein Hash, der über ein Signatur-Kürzel einer letzten signifikanten Änderung genommen wurde, mit dem Hash in der Änderungssatz-Datenstruktur übereinstimmt; und
Entschlüsseln (217; 621) eines verschlüsselten Datenabschnitts der Änderungssatz-Datenstruktur, um die Datei unter Verwendung eines geheimen Schlüssels zu erhalten, der von einer Vielzahl von Benutzern geteilt wird.

3. Verfahren nach Anspruch 1 oder 2, wobei die Änderungssatz-Datenstruktur weiterhin eines oder mehrere der Folgenden umfasst:
eine Dokumentkennung;
einen Initialisierungsvektor, der zum Ver- und Entschlüsseln der Datei verwendet werden kann;
Daten zur Nachrichtenauthentifizierung;
ein Hash des verschlüsselten Inhalts der Datei und/oder ein Hash über eine Vorgängerversion der Datei;
einen verschlüsselten Namen der Datei; und/oder
eine Sequenznummer.

4. Verfahren nach einem der vorhergehenden Ansprüche, ferner umfassend den Schritt von
Bereitstellen einer Schlüsselstruktur, die ein erstes Schlüsselpaar und ein zweites Schlüsselpaar umfasst,
wobei das erste Schlüsselpaar einen privaten Signaturschlüssel und einen öffentlichen Verifizierungsschlüssel umfasst, wobei das zweite Schlüsselpaar einen öffentlichen Verschlüsselungsschlüssel und einen privaten Entschlüsselungsschlüssel umfasst, wobei das erste und zweite Schlüsselpaar vorzugsweise asymmetrische Schlüsselpaare sind.

5. Verfahren nach Anspruch 4, wobei die Schlüsselstruktur zum Verschlüsseln des gemeinsamer geheimen Schlüssel, der vorzugsweise ein symmetrischer Schlüssel ist, verwendbar ist.

6. Verfahren nach Anspruch 4 oder 5, wobei der öffentliche Verifizierungsschlüssel des ersten Schlüsselpaares das zweite Schlüsselpaar digital signiert, wobei das erste Schlüsselpaar einen Benutzer eindeutig identifiziert.

7. Verfahren nach einem der vorhergehenden Ansprüche, wobei der verschlüsselte Datenabschnitt der Änderungssatz-Datenstruktur nur einen Teil des Inhalts der Datei darstellt, der im Vergleich zu einer früheren Version der Datei geändert wurde.

8. Verfahren nach einem der vorhergehenden Ansprüche, ferner umfassend den Schritt des Bereitstellens einer Gruppenänderungsdatenstruktur, die eines oder mehrere der Folgenden umfasst:
eine Gruppenidentifizierer;
einen oder mehrere Verweise auf einen öffentlichen Schlüssel eines Benutzers, der hinzugefügt und/oder entfernt werden soll aus einer Gruppe, die der Gruppenänderungsdatenstruktur entspricht;
einen Schlüssel-Fingerabdruck für jeden Verweis;
eine digitale Signatur;
eine Sequenznummer;
einen oder mehrere geheime Schlüssel, die zum Ver- und Entschlüsseln von Dateien verwendbar sind, wobei der eine oder die mehreren geheimen Schlüssel mit dem Verschlüsselungsschlüssel des zweiten Schlüsselpaares verschlüsselt sind; und/oder
eine oder mehrere Zugriffsberechtigungen für Benutzer.

9. Verfahren nach einem der vorhergehenden Ansprüche, ferner umfassend den Schritt des Bereitstellens einer historischen Datenstruktur, wobei die historische Datenstruktur eine Sequenz von Historiensegmenten umfasst, wobei jedes Historiensegment eine Sequenz von Gruppenänderungsdatenstrukturen und/oder Änderungssatz-Datenstrukturen umfasst;
wobei die Gruppenänderungsdatenstruktur eine Änderung einer Benutzergruppe widerspiegelt, und die Änderungssatz-Datenstruktur eine Änderung einer Datei widerspiegelt.

10. Verfahren nach Anspruch 9, wobei jedes Historiensegment ferner eine Historien-Prüfungs-Datenstruktur umfasst, vorzugsweise als letzte Struktur in der Sequenz, wobei die Historien- Prüfungs-Datenstruktur, umfasst:
einen ersten Hash, der das Vorgänger-Historiensegment identifiziert;
einen zweiten Hash über alle Strukturen im Historiensegment; und/oder
eine digitale Signatur über den ersten und zweiten Hash.

11. Verfahren nach Anspruch 10, wobei der zweite Hash erstens durch Schlüsselhashes der Strukturen geordnet ist;
zweitens durch einen Typ der Strukturen, wobei vorzugsweise Gruppenänderungsdatenstrukturen die höchste Priorität haben, Änderungssatz-Datenstrukturen, die eine Datei hinzufügen oder entfernen, die nächsthöhere Priorität haben, und dann Änderungssatz-Datenstrukturen, die eine Datei ändern;
und/oder
drittens durch einen Hash, der über ein Signaturkürzel der Struktur genommen wurde.

12. Verfahren nach einem der vorhergehenden Ansprüche 9-11, umfassend den Schritt des Beginnens eines neuen Historiensegments nach einer vordefinierten Zeitspanne, wie beispielsweise dreißig Tagen seitdem die letzte Änderungssatz-Datenstruktur angelegt wurde.

13. Verfahren nach einem der vorhergehenden Ansprüche, wobei eine Blockkette (Blockchain) verwendet wird, um die Änderungssatz-Datenstruktur zu speichern.

14. Computerprogramm, umfassend Anweisungen, die, wenn das Programm von einem Computer ausgeführt wird, den Computer veranlassen, ein Verfahren zu implementieren, wie in einem der vorhergehenden Verfahrensansprüche definiert wurde.

15. Client-Computer (C1; C2), der zum Ausführen eines Verfahrens konfiguriert ist, wie es in einem der vorhergehenden Verfahrensansprüche definiert ist.

16. System, umfassend eine Vielzahl von Client-Computern (C1; C2) nach Anspruch 15.

## Revendications

1. Un procédé de contrôle de version vérifiable mis en oeuvre par un calculateur client, le procédé comprenant :
le chiffrement (206 ; 610) d'au moins une partie du contenu d'un fichier en une structure de données de jeu de modifications, chaque jeu de modifications décrivant la différence entre la dernière version du fichier et une nouvelle version, en utilisant une clé secrète partagée entre une pluralité d'utilisateurs ; et
la signature (211 ; 615) de la structure de données de jeu de modifications en utilisant une clé de signature privée d'un utilisateur du calculateur client ;
dans lequel la structure de données de jeu de modifications comprend un hachage pris sur un résumé de signature d'une dernière modification significative, une modification significative étant l'un d'entre : un jeu de modifications qui ajoute un nouveau fichier, un jeu de modifications qui retire un fichier, une modification d'un groupe en ajoutant un nouveau membre, et/ou une modification d'un groupe en retirant un membre.

2. Un procédé de contrôle de version vérifiable mis en oeuvre par un calculateur client, le procédé comprenant :
la réception (213 ; 617) d'une structure de données de jeu de modifications, chaque jeu de modifications décrivant la différence entre la dernière version d'un fichier et une nouvelle version ;
la vérification (214 ; 618) d'une signature numérique de la structure de données de jeu de modifications en utilisant une clé de vérification publique d'un utilisateur qui a créé le jeu de modifications ;
dans lequel la structure de données de jeu de modifications comprend un hachage pris sur un résumé de signature d'une dernière modification significative, une modification significative étant l'un d'entre : un jeu de modifications qui ajoute un nouveau fichier, un jeu de modifications qui retire un fichier, un changement d'un groupe en ajoutant un nouveau membre, et/ou un changement d'un groupe en retirant un membre ; et dans lequel le procédé comprend en outre :
la vérification si un hachage pris sur un résumé de signature d'une dernière modification significative concorde ou non avec ledit hachage dans la structure de données de jeu de modifications ; et
le déchiffrement (217 ; 621) d'une partie de données chiffrée de la structure de données de jeu de modifications pour obtenir le fichier en utilisant une clé secrète partagée entre une pluralité d'utilisateurs.

3. Le procédé de la revendication 1 ou 2, dans lequel la structure de données de jeu de modifications comprend en outre un ou plusieurs parmi :
un identifiant de document ;
un vecteur d'initialisation utilisable pour le chiffrement et le déchiffrement du fichier ;
des données d'authentification de message ;
un hachage du contenu chiffré du fichier et/ou un hachage sur une version antérieure du fichier ;
un nom chiffré du fichier ; et/ou
un numéro de séquence.

4. Le procédé de l'une des revendications précédentes, comprenant en outre l'étape de production d'une structure de clés comprenant une première paire de clés et une seconde paire de clés,
la première paire de clés comprenant une clé privée de signature et une clé publique de vérification,
la seconde paire de clés comprenant une clé publique de chiffrement et une clé privée de déchiffrement,
dans lequel la première et la seconde paire de clés sont de préférence des paires de clés asymétriques.

5. Le procédé de la revendication 4, dans lequel la structure de clés est utilisable pour le chiffrement de la clé secrète partagée, qui est de préférence une clé symétrique.

6. Le procédé de la revendication 4 ou 5, dans lequel la clé publique de vérification de la première paire de clés signe numériquement la seconde paire de clés, la première paire de clés identifiant de façon univoque un utilisateur.

7. Le procédé de l'une des revendications précédentes, dans lequel la partie de données chiffrée de la structure de données de jeu de modifications ne représente qu'une partie du contenu du fichier qui a été modifié par rapport à une version antérieure du fichier.

8. Le procédé de l'une des revendications précédentes, comprenant en outre l'étape de production d'une structure de données de modification de groupe comprenant un ou plusieurs d'entre :
un identifiant de groupe ;
une ou plusieurs références à une clé publique d'un utilisateur à ajouter et/ou à retirer d'un groupe correspondant à la structure de données de modification de groupe ;
une empreinte de clé pour chaque référence ;
une signature numérique ;
un numéro de séquence ;
une ou plusieurs clés secrètes utilisables pour le chiffrement et le déchiffrement de fichiers, les une ou plusieurs clés secrètes étant chiffrées par la clé de chiffrement de la seconde paire de clés ; et/ou une ou plusieurs autorisations d'accès données à des utilisateurs.

9. Le procédé de l'une des revendications précédentes, comprenant en outre l'étape de production d'une structure de données historique, la structure de données historique comprenant une séquence de segments d'historique, chaque segment d'historique comprenant une séquence de structures de données de modification de groupe et/ou de structure de données de jeu de modifications ;
dans lequel la structure de données de modification de groupe reflète une modification d'un groupe d'utilisateurs, et la structure de données de jeu de modifications reflète une modification d'un fichier.

10. Le procédé de la revendication 9, dans lequel chaque segment d'historique comprend en outre une structure de données d'audit d'historique, de préférence en tant que dernière structure de la séquence, la structure de données d'audit d'historique comprenant :
un premier hachage identifiant le segment d'historique précédent ;
un second hachage sur toutes les structures du segment d'historique ; et/ou
une signature numérique sur le premier et le second hachage.

11. Le procédé de la revendication 10, dans lequel le second hachage est classé
en premier lieu, suivant les hachages de clés des structures ;
en second lieu, suivant un type des structures, où de préférence les structures de données de modification de groupe ont la priorité la plus élevée, les structures de données de jeu de modifications qui ajoutent ou retirent un fichier ont la priorité suivante la plus élevée, avec ensuite les structures de données de jeu de modifications qui modifient un fichier ; et/ou
en troisième lieu, suivant un hachage pris sur un résumé de signature de la structure.

12. Le procédé de l'une des revendications précédentes 9 à 11, comprenant l'étape de commencement d'un nouveau segment d'historique après un laps de temps prédéterminé, tel que trente jours depuis la création du dernier jeu de modifications.

13. Le procédé de l'une des revendications précédentes, dans lequel une chaine de blocs est utilisée pour stocker la structure de données de jeu de modifications.

14. Un programme informatique comprenant des instructions qui, lorsque le programme est exécuté par un calculateur, font en sorte que le calculateur implémente un procédé tel que défini dans l'une des revendications de procédé précédentes.

15. Un calculateur client (C1 ; C2) configuré pour mettre en oeuvre un procédé tel que défini dans les revendications de procédé précédentes.

16. Un système comprenant une pluralité de calculateurs clients (C1 ; C2) selon la revendication 15.
